Europäisches Patentamt

European Patent Office

Office européen des brevets

(19)

(11) Publication number: **0 397 337**
**A2**

(12) **EUROPEAN PATENT APPLICATION**

(21) Application number: **90304294.3**

(22) Date of filing: **20.04.90**

(51) Int. Cl.⁵: **G02B 6/12**

(30) Priority: **12.05.89 GB 8910954**

(43) Date of publication of application:
**14.11.90 Bulletin 90/46**

(84) Designated Contracting States:
**DE FR IT NL SE**

(71) Applicant: **PLESSEY OVERSEAS LIMITED**
**Vicarage Lane**
**Ilford Essex IG1 4AQ(GB)**

(72) Inventor: **Ash, Richard Mark**
**73 Broadway**
**Northampton NN1 4SG(GB)**

(74) Representative: **Lawrence, Brian Richard**
**GEC Patent Departmen GEC-Marconi**
**Research Centre West Hanningfield Road**
**Great Baddow**
**Chelmsford, Essex CM2 8HN(GB)**

(54) **A semiconductor waveguide arrangement and method of fabrication thereof.**

(57) A semi-conductor waveguide arrangement wherein several waveguides 5, 7 are arranged such that there is a possibility of spurious optical coupling. There being provided light absorption means (3, 21, 33) to absorb spurious light emitted from the waveguides 5, 7 to prevent spurious optical coupling. A method of fabrication of a semi-conductor arrangement including absorption means (3, 21, 33) is illustrated.

EP 0 397 337 A2

## A SEMICONDUCTOR WAVEGUIDE ARRANGEMENT AND METHOD OF FABRICATION THEREOF

The present invention relates to a waveguide arrangement and a method of fabrication thereof.

Semi-conductor assemblies are frequently fabricated with waveguides to couple light signals between active elements. With increasing miniaturisation and demands to maximise device surface utilisation there is a problem of prevention of spurious optical coupling or cross-talk between parallel waveguides.

Previously, spurious optical coupling of parallel waveguides has been reduced by incorporation of roughened surfaces such that any internal reflections are scattered and consequently diffused. However, the incorporation of roughened surfaces is difficult with miniature waveguides and is not very effective.

It is an objective of the present invention to provide a waveguide arrangement in which spurious optical light coupling is significantly reduced.

According to the present invention there is provided a semiconductor waveguide arrangement for reducing light coupled between two waveguide means, the arrangement including light absorption means located to absorb at least a proportion of any spurious light emitted by the waveguide means.

Preferably, the absorption means may be a layer of absorption material either arranged continuous and parallel to each waveguide or between waveguides or both.

Further in accordance with the present invention there is provided a method of fabricating a waveguide arrangement which includes two optical waveguide means, said method including the step of depositing a light absorption layer for absorbing at least a proportion of any spurious light which may be emitted by said waveguide means.

Embodiments of the present invention will now be described by way of example only with reference to the accompanying drawings in which:-

Figure 1 illustrates, in schematic cross-section, a first embodiment of the present invention;

Figure 2 illustrates, in schematic cross-section, a second embodiment of the present invention; and,

Figures 3 to 12 illustrate a fabrication method for a waveguide in accordance with the present invention.

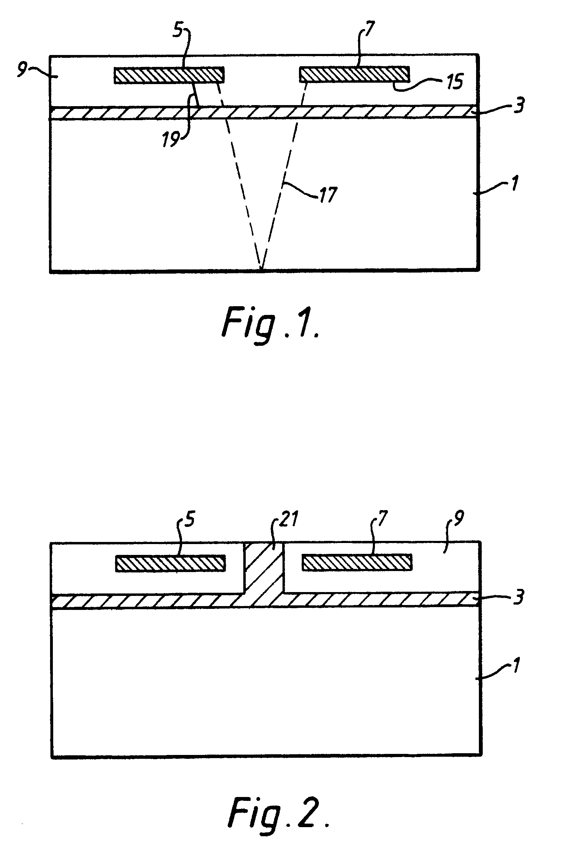

Considering Figure 1, upon a semi-conductor 'seed' substrate 1 is placed a light absorbent layer 3 while waveguides 5, 7 are formed in an epitaxial layer 9 formed on the absorbent layer 3. It will be appreciated that the spurious light will be emitted by each waveguide 5, 7 to a degree dependent upon area of the waveguide. Consequently, most spurious light emitted by each waveguide 5, 7 is through its top surface 11 and bottom surface 15. A typical spurious light ray path is indicated by broken line 17 (if the effect of the absorbent layer 3 is ignored), as can be seen the light ray is coupled, for example, between waveguides 5, 7 by reflection upon the seed substrate 1 lower surface.

In the present invention, a spurious light ray illustrated by solid line 19 is absorbed by the absorbent layer 3. Thus, the light ray is not coupled between waveguides 5, 7.

The seed substrate 1 and epitaxial substrate layer 9 may be formed from Indium Phosphide, Gallium Arsenide or Gallium Phosphide although it will be appreciated that other transparent substrates could be used.

The absorbent layer 3 may be formed from Gallium Indium Arsenide Phosphide, Germanium, Germanium Indium Arsenide, Gallium Indium Arsenide Antimony, Gallium Aluminium Indium Arsenide or a metallic light absorber, although it will be appreciated that other light absorbent materials could be used.

In Figure 2, a second and preferred embodiment of the present invention is illustrated. A further absorber layer 21 is added to layer 3 such that lateral spurious light from each waveguide 5, 7 is absorbed. Thus, the waveguides 5, 7 are effectively optically isolated from each other. It will be appreciated that the layer 21 could be used alone without the layer 3 if it penetrates deep enough into the substrate 1; this may be achieved by diffusion or ion implementation.

Although in Figures 1 and 2 the absorbent layers 3, 21 have been illustrated as continuous, it will be appreciated that these absorbent layers 3, 21 may be localised near a respective waveguide. Thus, the layers 3, 21 may be isolated from one another as slabs or islands. Furthermore, although the absorbent layers have been illustrated as planar they could be fabricated in different, possibly advantageous shapes such as saw-tooth or square waved. It will however be understood that it is essentially the absorbent layer 3, 21 thickness that determines whether light absorption is effective and that these layers 3, 21 could comprise several spaced layers of absorbent material with transparent material there between.

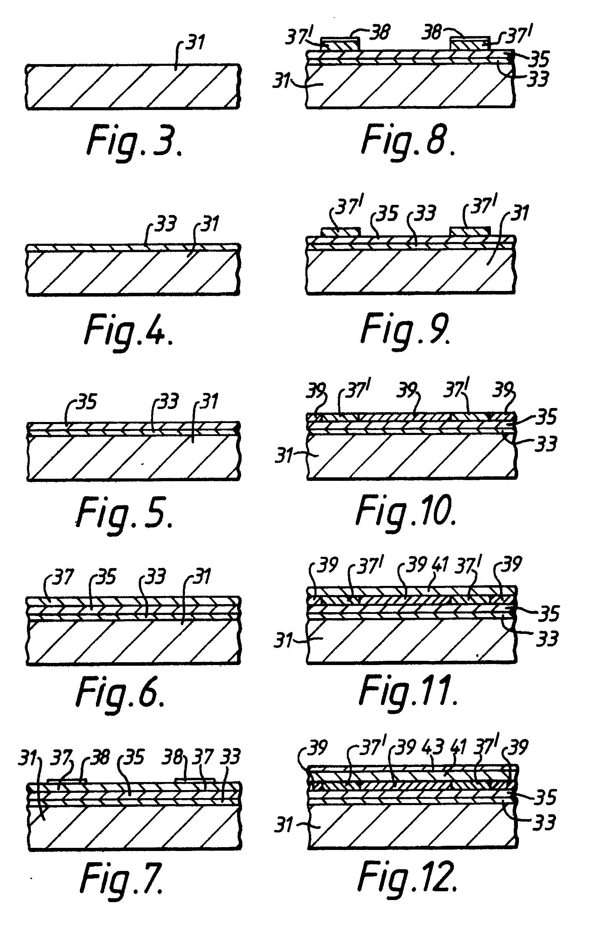

An examplary method of fabrication of a waveguide arrangement according to the present invention is illustrated in Figures 3 to 12.

Figure 3 illustrates a seed substrate 31 of GaAs, this seed substrate 31 may be part of a larger integrated circuit including several active devices.

A first step of fabrication of a waveguide in accordance the examplary method is to epitaxially grow an absorbent layer 33 upon the substrate 31. The absorbent layer 33 can be grown directly to the substrate 31 or after deposition of other active and passive epitaxial layers (not shown). The epitaxial growth of the absorbent layer 33 may be by chemical vapour deposition (CVD), metallo-organic chemical vapour deposition (MOCVD), liquid phase epitaxy (LPE), molecular beam epitaxy (MBE) or metallo-organic molecular beam epitaxy (MOMBE) or any other semiconductor growth technique.

After deposition of the absorbent layer 33, further epitaxial layers 35, 37, 39, 41 are deposited to form waveguides or other passive/active devices. These epitaxial layers 35, 37, 39, 41 are light transparent and may be formed from Indium Phosphide, Gallium Arsenide or Gallium Phosphide. Firstly, layer 35 having a first refractive index is deposited upon absorbent layer 33 (Figure 5) then layer 37 having a second refractive index is deposited upon layer 35 (Figure 6). A mask pattern 38 is then applied to layer 37 (Figure 7), photolithographically. This pattern 38 defines the waveguides and any other electrical/optical properties of active devices. The layer 37 is then etched to leave only parts 37′ (Figure 8).

The mask pattern 38 is removed (Figure 9). Finally, layer 39 (Figure 10) and layer 41 (Figure 11) are deposited to encapsulate parts 37′ to define waveguides, consequently layers 39, 41 have a refractive index substantially the same as layer 35. In addition, a light absorbent cover layer 43 may be added to cover the waveguides i.e. 37′, formed (Figure 12).

It will be appreciated, that the absorbent layer 33 and cover layer 43 must be arranged such that light in waveguides 37′ other than that which is spurious does not interact with them.

In alternative methods of fabrication, the substrate 31 could have it's top surface adapted by diffusion or ion implantation to provide a light absorption layer.

## Claims

1. A semi-conductor waveguide arrangement for reducing light coupled between two optical waveguide means, the arrangement including light absorption means located to absorb at least a proportion of any spurious light emitted by the waveguide means.

2. An arrangement as claimed in claim 1 wherein the absorption means comprises a layer of absorption material.

3. An arrangement as claimed in claim 2 wherein the absorption means is continuous and parallel with the waveguide means.

4. An arrangement as claimed in claim 2 wherein the absorption means is disposed between the two parallel waveguide means.

5. An arrangement as claimed in claim 2 wherein the absorption means comprises a layer of absorption material parallel to each waveguide means and a layer of absorption material between the two waveguide means.

6. An arrangement as claimed in any preceding claim wherein the light absorption means is formed from Gallium Arsenide Phosphide, Germanium, Gallium Indium Arsenide, Gallium Indium Arsenide, Gallium Indium Arsenide Antimony, Gallium Aluminium Indium Arsenide or a metal layer.

7. A method of fabricating a waveguide arrangement which includes two optical waveguide means, said method including the step of depositing a light absorption layer for absorbing at least a proportion of any spurious light which may be emitted by said waveguide means.

8. A method as claimed in claim 7 wherein the absorption layer is deposited by chemical vapour deposition, metallo-organic chemical vapour deposition, liquid phase epitaxy, molecular beam epitaxy or metallo-organic molecular beam epitaxy.

Fig.1.

Fig.2.

Fig. 3.

Fig. 8.

Fig. 4.

Fig. 9.

Fig. 5.

Fig. 10.

Fig. 6.

Fig. 11.

Fig. 7.

Fig. 12.